# EUROPÄISCHE PATENTSCHRIFT

(11) **EP 3 393 865 B1**
(45) Veröffentlichungstag und Bekanntmachung des Hinweises auf die Patenterteilung: **31.03.2021**
(21) Anmeldenummer: 16816671.8
(22) Anmeldetag: 19.12.2016
(51) Int. Cl.: B60R 25/00, B60J 1/16, B60R 16/023, B60W 50/02

(54) **ÜBERWACHUNG UND MODIFIKATION VON KRAFTFAHRZEUGFUNKTIONEN IN EINEM KRAFTFAHRZEUG**
MONITORING AND MODIFYING MOTOR VEHICLE FUNCTIONS IN A MOTOR VEHICLE
SURVEILLANCE ET MODIFICATION DE FONCTIONS DANS UN VÉHICULE AUTOMOBILE

(30) Priorität: 21.12.2015 DE 102015226236
(43) Veröffentlichungstag der Anmeldung: 31.10.2018
(73) Patentinhaber: Bayerische Motoren Werke Aktiengesellschaft, 80809 München (DE)
(72) Erfinder: NEFF, Albrecht, 85716 Unterschleißheim (DE); PITZ, Michael, 80992 München (DE); FISCHER, Kay, 85293 Reichertshausen (DE)
(86) Internationale Anmeldenummer: PCT/EP2016/081714
(87) Internationale Veröffentlichungsnummer: WO 2017/108675

(56) Entgegenhaltungen:
- EP-A2- 0 503 409
- WO-A1-2013/028840
- WO-A1-2014/195180
- GB-A- 2 473 956

## Beschreibung

Die vorliegende Erfindung betrifft ein Verfahren zur Überwachung und Modifikation von Kraftfahrzeugfunktionen in einem Kraftfahrzeug, eine diesbezügliche Vorrichtung und ein diesbezügliches Kraftfahrzeug.

Werden aktuell Fehlfunktionen in Steuergeräten festgestellt, so werden diese Fehler entweder durch ein Softwareupdate in der Werkstatt behoben oder falls dies nicht möglich ist, durch einen Austausch des Steuergerätes in der Werkstatt. In beiden Fällen jedoch, muss das Fahrzeug in eine Werkstatt gebracht werden.

Ferner ist es aktuell lediglich durch ein in der Werkstatt vorzunehmendes Softwareupdate möglich, Steuergeräte beziehungsweise Fahrzeugfunktionen an neue beziehungsweise veränderte Gegebenheiten anzupassen.

Auch kommt es in letzter Zeit häufiger vor, dass Fahrzeugfunktionen beziehungsweise Fahrzeugfunktionalitäten und Steuergeräte kompromittiert werden. Solche auftretenden Sicherheitslücken können aktuell auch erst durch ein aufwändiges Softwareupdate in einer Werkstatt behoben werden.

Daher wäre es wünschenswert eine Möglichkeit bereitzustellen, welche schnell und ohne Notwendigkeit eines Werkstattbesuches solche Fehlfunktionen und Störungen beziehungsweise solch kritische Ereignisse behebt.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch, sowie mittels einer Vorrichtung gemäß einem nebengeordneten Anspruch und eines entsprechenden Kraftfahrzeuges gemäß eines weiteren nebengeordneten Anspruches.

Der Gegenstand des Hauptanspruches betrifft dabei ein Verfahren zur Überwachung und Modifikation von Kraftfahrzeugfunktionen in einem Kraftfahrzeug. Das Verfahren weist dabei auf: Ermitteln eines anomalen Verhaltens einer Funktion des Kraftfahrzeuges. Übermitteln des anomalen Verhaltens der Funktion des Kraftfahrzeuges an ein Backend. Empfangen einer Instruktion von dem Backend. Dabei ist die Instruktion indikativ, für eine zu ergreifende akute Maßnahme in dem Kraftfahrzeug, um auf das anomale Verhalten der Funktion eine adäquate Reaktion auszuführen. Ermitteln einer Kraftfahrzeugkomponente, welche ursächlich für das anomale Verhalten der Funktion des Kraftfahrzeuges ist, basierend auf der empfangenen Instruktion. Überführen der Kraftfahrzeugkomponente in eine degradierte Konfiguration als adäquate Reaktion. Dabei weist die degradierte Konfiguration einen eingeschränkteren Funktionsumfang auf, als in dessen bisheriger Konfiguration. Und falls das Überführen der Kraftfahrzeugkomponente in die degradierte Konfiguration nicht möglich ist, weist das Verfahren ferner auf: Überführen der Kraftfahrzeugkomponente in eine sichere Konfiguration als adäquate Reaktion. Dabei ist die sichere Konfiguration in der Kraftfahrzeugkomponente vorgehalten.

Die Verfahrensschritte können dabei automatisiert ausgeführt werden.

Ein anomales Verhalten im Sinne der Erfindung meint dabei ein Verhalten einer Kraftfahrzeugfunktion, die außerhalb einem definierten Verhalten liegt. Das anomale Verhalten kann dabei ein kritisches Ereignis sein, welches Security- und/oder Safety-relevant in Bezug auf eine entsprechende Fahrsituation und/oder eine Fahrzeugfunktion beziehungsweise ein Steuergerät des Kraftfahrzeuges ist.

Eine Funktion im Sinne der Erfindung meint dabei einen Vorgang, der von einer Kraftfahrzeugkomponente ausgeführt wird und sich auf das Verhalten des Kraftfahrzeuges auswirkt. Beispiele dafür können Assistenzfunktionen, wie Lenkbewegungen, Fernlichtassistenzfunktion, Abstandshaltung und dergleichen des Kraftfahrzeuges sein, jedoch auch Komfortfunktionen wie beispielsweise eine Navigation, eine elektrische automatische Sitzeinstellung und dergleichen.

Ein Backend im Sinne der Erfindung meint dabei einen Server beziehungsweise eine Cloud, auf dem ermittelte Lösungen für bekannte und unbekannte Probleme bei Kraftfahrzeugfunktionen beziehungsweise Steuergeräten von Kraftfahrzeugen bereitgestellt werden. Dies kann beispielsweise mittels einer entsprechenden Problemlösungsdatenbank realisiert werden.

Eine Kraftfahrzeugkomponente im Sinne der Erfindung meint dabei Vorrichtungen wie beispielsweise Steuergeräte beziehungsweise Steuervorrichtungen, Komfortfunktionsvorrichtungen und Assistenzsysteme, die sowohl in Hardware als auch in Software ausgestaltet sein können. Das Ermitteln der Kraftfahrzeugkomponente kann dabei beispielsweise basierend auf einer Steuergeräteinformation erfolgen. Die ist eine Information, mit welcher auf ein bestimmtes Steuergerät zurückgeschlossen werden kann, wie beispielsweise eine Seriennummer, ein Herstellungsdatum, eine Firmwarenummer und dergleichen oder auch eine Kombination dieser Informationen.

Eine degradierte Konfiguration im Sinne der Erfindung meint dabei eine Konfiguration, welche die Funktion beziehungsweise den Funktionsumfang der entsprechenden Kraftfahrzeugkomponente mittels Parametermodifikation einschränkt. Eine Parametermodifikation kann dabei insbesondere eine Änderung eines Wertes eines entsprechenden Parameters einer Fahrzeugfunktion beziehungsweise eines Steuergerätes des Kraftfahrzeuges meinen. Dabei kann vorzugsweise eine Default-Wert des entsprechenden Parameters temporär überschrieben werden. Das heißt, dass der Default-Wert nicht verloren geht, sondern zwischengespeichert wird, vorzugsweise in dem Steuergerät selbst. Jedoch ist auch ein Zwischenspeichern des Default-Wertes an einer anderen Stelle im Kraftfahrzeug möglich, beispielsweise in einem zentralen Controller in einer zentralen Default-Werte-Datenbank. Der modifizierte Parameter kann dabei beispielsweise nach einem bestimmten Zeitlimit wieder zurückgesetzt werden, somit also erneut mit dem Default-Wert überschrieben werden. Dabei kann der überschriebene Wert verloren gehen. Er kann jedoch auch zusätzlich weiterhin gespeichert vorgehalten werden.

Eine sichere Konfiguration im Sinne der Erfindung meint dabei eine Konfiguration, welche in der Kraftfahrzeugkomponenten hinterlegt ist und als funktionssicher gilt, bezüglich gültiger Sicherheitsnormen, wie Beispielsweise der ISO26262 und darauf basierenden Normen.

Durch die erfindungsgemäße Lehre wird der Vorteil erreicht, dass im Falle eines Eintretens einer Funktionsstörung des Kraftfahrzeuges oder von Teilen des Kraftfahrzeuges, dieses Verhalten erkannt werden kann und unter Zuhilfenahme eines Backendsystems nach einer entsprechenden Lösung für die aufgetretene Funktionsstörung beziehungsweise von der Funktionsstörung betroffenen Fahrzeugfunktionen beziehungsweise Steuergräten gesucht werden kann und anschließend eine entsprechende Lösung für die aufgetretene Funktionsstörung bereitgestellt werden kann.

Ein weiterer Vorteil ist, dass damit umgehend auf eine aufgetretene Funktionsstörung adäquat reagiert werden kann, um die Funktionsstörung einzudämmen und einen sicheren Betrieb des Kraftfahrzeuges weiterhin zu ermöglichen beziehungsweise verhindern zu können, dass ein problematischer, also unsicherer, Fahrzeugbetrieb entstehen kann.

Der Gegenstand eines nebengeordneten Anspruches betrifft dabei eine Vorrichtung zur Überwachung und Modifikation von Kraftfahrzeugfunktionen in einem Kraftfahrzeug. Die Vorrichtung weist dabei auf: Eine Funktionsüberwachungsvorrichtung, zum Ermitteln eines anomalen Verhaltens einer Funktion des Kraftfahrzeuges. Ein Ermittlungsmittel, zum Ermitteln einer Kraftfahrzeugkomponente, welche ursächlich für das anomale Verhalten der Funktion des Kraftfahrzeuges ist. Ein Modifizierungsmittel, zum Überführen der Kraftfahrzeugkomponente in eine degradierte Konfiguration und/oder in eine sichere Konfiguration. Dabei weist die degradierte Konfiguration einen eingeschränkteren Funktionsumfang auf, als in dessen bisheriger Konfiguration. Die sichere Konfiguration ist dabei in der Kraftfahrzeugkomponente vorgehalten. Dabei ist die sichere Konfiguration der Kraftfahrzeugkomponente gesichert, gegen ein Manipulieren der sicheren Konfiguration. Und dabei ist die Vorrichtung dazu eingerichtet, irgendein erfindungsgemäßes Verfahren auszuführen.

Durch die erfindungsgemäße Lehre wird der Vorteil erreicht, dass im Falle eines Eintretens einer Funktionsstörung des Kraftfahrzeuges oder von Teilen des Kraftfahrzeuges, eine Vorrichtung für das Kraftfahrzeug dieses Verhalten erkennen kann und unter Zuhilfenahme eines Backendsystems selbständig nach einer entsprechenden Lösung für die aufgetretene Funktionsstörung beziehungsweise von der Funktionsstörung betroffenen Fahrzeugfunktionen beziehungsweise Steuergräten suchen kann und anschließend eine entsprechende Lösung für die aufgetretene Funktionsstörung bereitstellen kann.

Ein weiterer Vorteil ist, dass damit umgehend auf eine aufgetretene Funktionsstörung adäquat reagiert werden kann, um die Funktionsstörung einzudämmen und einen sicheren Betrieb des Kraftfahrzeuges weiterhin zu ermöglichen beziehungsweise verhindern zu können, dass ein problematischer, also unsicherer, Fahrzeugbetrieb entstehen kann.

Der Gegenstand eines weiteren nebengeordneten Anspruches betrifft dabei ein Kraftfahrzeug. Dabei weist das Kraftfahrzeug auf: Mindestens eine Kraftfahrzeugkomponente, eine Mobilfunkkommunikationsvorrichtung, zum Übermitteln eines anomalen Verhaltens einer Funktion des Kraftfahrzeuges an ein Backend und zum Empfangen einer Instruktion bezüglich des anomalen Verhaltens der Funktion, und eine erfindungsgemäße Vorrichtung zur Überwachung und Modifikation von Kraftfahrzeugfunktionen in dem Kraftfahrzeug. Dabei weist die Kraftfahrzeugkomponente eine sichere Konfiguration auf, die vorzugsweise gesichert ist, gegen ein Manipulieren der sicheren Konfiguration. Und die erfindungsgemäße Vorrichtung zur Überwachung und Modifikation von Kraftfahrzeugfunktionen in dem Kraftfahrzeug ist dazu eingerichtet, irgendein erfindungsgemäßes Verfahren auszuführen.

Durch die erfindungsgemäße Lehre wird der Vorteil erreicht, dass im Falle eines Eintretens einer Funktionsstörung des Kraftfahrzeuges oder von Teilen des Kraftfahrzeuges, das Kraftfahrzeug dieses Verhalten erkennen kann und unter Zuhilfenahme eines Backendsystems selbständig nach einer entsprechenden Lösung für die aufgetretene Funktionsstörung beziehungsweise von der Funktionsstörung betroffenen Fahrzeugfunktionen beziehungsweise Steuergräten suchen kann und anschließend eine entsprechende Lösung für die aufgetretene Funktionsstörung bereitstellen kann.

Ein weiterer Vorteil ist, dass damit umgehend auf eine aufgetretene Funktionsstörung adäquat reagiert werden kann, um die Funktionsstörung einzudämmen und einen sicheren Betrieb des Kraftfahrzeuges weiterhin zu ermöglichen beziehungsweise verhindern zu können, dass ein problematischer, also unsicherer, Fahrzeugbetrieb entstehen kann.

Der Gegenstand eines weiteren nebengeordneten Anspruches betrifft dabei ein Computerprogrammprodukt für eine erfindungsgemäße Vorrichtung und/oder ein erfindungsgemäßes Kraftfahrzeug, wobei die Vorrichtung nach irgendeinem erfindungsgemäßen Verfahren betreibbar ist.

Durch die erfindungsgemäße Lehre wird der Vorteil erreicht, dass das Verfahren besonders effizient automatisiert ausgeführt werden kann.

Der Gegenstand eines weiteren nebengeordneten Anspruches betrifft dabei einen Datenträger aufweisend ein erfindungsgemäßes Computerprogrammprodukt.

Durch die erfindungsgemäße Lehre wird der Vorteil erreicht, dass das Verfahren besonders effizient auf die das Verfahren ausführenden Vorrichtungen, Systeme und/oder Kraftfahrzeuge verteilt beziehungsweise vorgehalten werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mit umfasst, soweit der Kontext dies nicht explizit ausschließt. Etwaige Verfahrensschritte können, soweit der Kontext dies nicht explizit ausschließt, automatisiert ausgeführt werden.

Nachfolgend werden weitere exemplarische Ausgestaltungen des erfindungsgemäßen Verfahrens erläutert.

Entsprechend einer ersten exemplarischen Ausgestaltung weist das Verfahren ferner, für den Fall, dass das Überführen der Kraftfahrzeugkomponente in die sichere Konfiguration nicht möglich ist, ein Abschalten der Kraftfahrzeugkomponente als adäquate Reaktion auf.

Diese Ausgestaltung weist den Vorteil auf, dass ein Notfallbetrieb ermöglicht werden kann, in welchem das Kraftfahrzeug sicher betrieben werden kann, selbst wenn die von der Funktionsstörung betroffene Kraftfahrzeugkomponente nicht in eine sichere Konfiguration überführt werden kann.

Entsprechend einer weiteren exemplarischen Ausgestaltung weist das Verfahren ferner, für den Fall, dass das Abschalten der Kraftfahrzeugkomponente nicht erfolgreich ist, ein Überführen des Kraftfahrzeuges in einen sicheren Zustand als adäquate Reaktion auf. Dabei weist der sichere Zustand einen sicheren Betrieb des Kraftfahrzeuges bezüglich einer Safety- und/oder Security-Relevanz auf.

Der sichere Betrieb im Sinne der Erfindung meint dabei einen Betrieb, der funktionssicher bezüglich Safety- und/oder Security-Aspekten eines Fahrbetriebes und/oder Fahrzeugbetriebes des Kraftfahrzeuges ist.

Safety-relevant im Sinne der Erfindung meint dabei relevant bezüglich gültiger Sicherheitsnormen, wie Beispielsweise der ISO26262 und darauf basierenden Normen.

Security-relevant im Sinne der Erfindung meint dabei hingegen relevant für den Zugriffschutz, Schutz vor Eindringlingen, Schutz vor Datenverfälschungen und/oder Datenmanipulationen, Manipulationen von Steuergeräten und dergleichen.

Ein sicherer Zustand bezüglich des kritischen Ereignisses im Sinne der Erfindung, kann dabei einen Zustand einer entsprechenden Fahrsituation und/oder einer Fahrzeugfunktion beziehungsweise eines Steuergerätes des Kraftfahrzeuges meinen, bei dem bezüglich der zu steuernden Safety-relevanten Funktion/System/Modul und damit etwaiger weiterer damit verbundener Safety-relevanter Funktionen/Systeme/Module, von welchem/denen kein unvertretbares Risiko für Leib und Leben ausgehen kann.

Diese Ausgestaltung weist den Vorteil auf, dass es ermöglicht werden kann, auf Safety- und/oder Securityrelevante kritische Funktionsstörungen des Kraftfahrzeuges zu reagieren und sicherzustellen, dass das Kraftfahrzeug im Betrieb funktionssicher bleibt.

Entsprechend einer weiteren exemplarischen Ausgestaltung weist das Verfahren ferner, für den Fall, dass das Überführen des Kraftfahrzeuges in den sicheren Zustand nicht möglich ist, ein Abschalten eines Fahrbetriebes des Kraftfahrzeuges als adäquate Reaktion auf.

Diese Ausgestaltung weist den Vorteil auf, dass verhindert werden kann, dass ein Kraftfahrzeug, bei dem eine Funktionsstörung von Kraftfahrzeugkomponenten vorliegt die nicht behoben werden kann, dieses Kraftfahrzeug unsicher betrieben wird.

Entsprechend einer weiteren exemplarischen Ausgestaltung weist das Verfahren ferner auf, dass das Abschalten des Fahrbetriebes des Kraftfahrzeuges, sicher bezüglich einer Safety-Relevanz des Kraftfahrzeuges erfolgt.

Diese Ausgestaltung weist den Vorteil auf, dass das Abschalten des Kraftfahrzeuges unfallfrei erfolgen kann.

Entsprechend einer weiteren exemplarischen Ausgestaltung weist das Verfahren ferner ein Übermitteln der durchgeführten adäquaten Reaktion an das Backend auf, als erfolgreich ergriffene akute Maßnahme in dem Kraftfahrzeug.

Diese Ausgestaltung weist den Vorteil auf, dass eine Qualitätssicherung für die an das Kraftfahrzeug übermittelte Instruktion möglich wird.

Ein weiterer Vorteil ist, dass die adäquate durchgeführte Reaktion in Backend aufgezeichnet werden kann, um darauf basierend weitere Lösungsmöglichkeiten ermitteln zu können beziehungsweise die übermittelten Instruktionen weiter entwickeln zu können, um diese kontinuierlich zu verbessern.

Entsprechend einer weiteren exemplarischen Ausgestaltung weist das Verfahren ferner ein Empfangen eines Patches von dem Backend auf, als eine Anomalie-Korrektur-Instruktion, welche indikativ ist, für eine zu ergreifende persistente Maßnahme in dem Kraftfahrzeug, um das anomale Verhalten der Funktion künftig zu beseitigen und/oder zu unterbinden.

Diese Ausgestaltung weist den Vorteil auf, dass über eine temporäre Lösung hinaus, für die Funktionsstörung beziehungsweise für das anomale Verhalten der betroffenen Funktion eine permanente Modifikation bereitgestellt werden kann, um ein erneutes Auftreten dieses anomalen Verhaltens beziehungsweise um bei einem erneuten Auftreten dieses anomalen Verhaltens, einen funktionssicheren Betrieb der Funktion des Kraftfahrzeuges ermöglichen zu können.

Entsprechend einer weiteren exemplarischen Ausgestaltung weist das Verfahren ferner auf: Ermitteln einer weiteren Kraftfahrzeugkomponente, welche ebenfalls von dem anomalen Verhalten der Funktion des Kraftfahrzeuges betroffen ist, vorzugsweise basierend auf der empfangenen Instruktion. Und entsprechendes Anwenden der weiteren Verfahrensschritte zur Modifikation der Kraftfahrzeugkomponente auf die weitere Kraftfahrzeugkomponente.

Ein entsprechendes Anwenden der weiteren Verfahrensschritte zur Modifikation der Kraftfahrzeugkomponente auf die weitere Kraftfahrzeugkomponente im Sinne der Erfindung meint dabei, dass Verfahrensteile der beschriebenen exemplarischen Ausgestaltungen, zur Behebung und/oder Korrektur des anomalen Verhaltens der Kraftfahrzeugkomponente, auch auf die weitere Kraftfahrzeugkomponente anwendbar sind.

Diese Ausgestaltung weist den Vorteil auf, dass eine Lösung für das anomale Verhalten weiterer betroffener Funktionen bereitgestellt werden kann.

Entsprechend einer weiteren exemplarischen Ausgestaltung weist das Verfahren ferner ein Übermitteln der durchgeführten adäquaten Reaktion an ein weiteres Kraftfahrzeug auf, als Instruktion, für eine zu ergreifende aktuelle und/oder vorbeugende akute Maßnahme in dem weiteren Kraftfahrzeug.

Diese Ausgestaltung weist den Vorteil auf, dass weitere Kraftfahrzeuge auf das anomale Verhalten vorbereitet beziehungsweise vorkonditioniert werden können, auch wenn diese Kraftfahrzeuge von dem anomalen Verhalten zu diesem Zeitpunkt noch nicht betroffen sind.

Entsprechend einer weiteren exemplarischen Ausgestaltung weist das Verfahren ferner auf, dass das Übermitteln der durchgeführten adäquaten Reaktion an das weitere Kraftfahrzeug von dem Kraftfahrzeug aus erfolgt.

Diese Ausgestaltung weist den Vorteil auf, dass das von dem anomalen Verhalten betroffene Kraftfahrzeug selbst weitere Kraftfahrzeuge entsprechend vorbereiten kann.

Entsprechend einer weiteren exemplarischen Ausgestaltung weist das Verfahren ferner auf, dass das Übermitteln der durchgeführten adäquaten Reaktion an das weitere Kraftfahrzeug von dem Backend aus erfolgt.

Diese Ausgestaltung weist den Vorteil auf, dass das Backend, nachdem es von dem von dem anomalen Verhalten betroffenen Kraftfahrzeug informiert wurde, weitere Kraftfahrzeuge entsprechend vorbereitend instruieren kann.

Entsprechend einer weiteren exemplarischen Ausgestaltung weist das Verfahren ferner auf, dass das Ermitteln des anomalen Verhaltens der Funktion des Kraftfahrzeuges von dem Backend, von einem Kraftfahrzeuginsassen und/oder von einer kraftfahrzeugeigenen Routine feststellbar ist.

Diese Ausgestaltung weist den Vorteil auf, dass das Auftreten des anomalen Verhaltens von mehreren Quellen festgestellt werden kann. Dadurch kann die Entdeckungsgeschwindigkeit des anomalen Verhaltens erhöht werden. Dadurch kann die Zeit, vom ersten Auftreten der Anomalie bis zu deren Entdeckung verringert werden, wodurch die Kraftfahrzeugsicherheit beziehungsweise Kraftfahrzeugzuverlässigkeit erhöht werden kann.

Entsprechend einer weiteren exemplarischen Ausgestaltung weist das Verfahren ferner auf, dass das Backend eine zertifizierte kraftfahrzeugexterne Authorität aufweist.

Diese Ausgestaltung weist den Vorteil auf, dass die Möglichkeit eines Missbrauches der vorgestellten Erfindung, beispielsweise für eine Nutzung zum Einschleusen eines solchen anomalen Verhaltens, zumindest reduziert wenn nicht gar vollständig verhindert werden kann.

Entsprechend einer weiteren exemplarischen Ausgestaltung weist das Verfahren auf, dass die Instruktion eine Weisung aufweist, unter welchen Kriterien die adäquate Reaktion wieder aufgehoben werden kann.

Solche Kriterien können zeitgebunden sein, können jedoch auch bestimmte Zustände sein, wie beispielsweise Funktionszustände oder Kraftfahrzeugzustände, die bei Vorliegen eines solchen Kriteriums, ein Aufheben der vorzunehmenden Modifikationen vorsehen.

Diese Ausgestaltung weist den Vorteil auf, dass eine Möglichkeit vorgesehen ist, die vorzunehmende Modifikation wieder aufzuheben beziehungsweise rückgängig zu machen. Dies kann insbesondere dann sein, wenn deutlich ist, dass das anomale Verhalten lediglich von temporärer Natur ist.

Entsprechend einer weiteren exemplarischen Ausgestaltung weist das Verfahren ferner auf, dass das anomale Verhalten der Funktion des Kraftfahrzeuges indikativ ist, für ein Hacking des Kraftfahrzeuges beziehungsweise der Kraftfahrzeugkomponente.

Dabei kann das Hacking mittels einer Datenmanipulation oder auch einer Manipulation eines Steuergerätes, beispielsweise mittels eines sogenannten Hacking-Angriffs, von außerhalb des Kraftfahrzeuges mittels einer wireless Lösung erfolgen.

Diese Ausgestaltung weist den Vorteil auf, dass einem Kompromittieren eines Kraftfahrzeuges beziehungsweise einer Kraftfahrzeugfunktion des Kraftfahrzeuges schnellstmöglich begegnet werden kann, um das Kompromittieren eindämmen zu können.

Entsprechend einer weiteren exemplarischen Ausgestaltung weist das Verfahren ferner auf, dass das anomale Verhalten der Funktion dazu geeignet ist, einen funktionssicheren Betrieb des Kraftfahrzeuges zu gefährden.

Diese Ausgestaltung weist den Vorteil auf, dass für fahrzeugkritische Funktionen entsprechende Modifikations- und Eingriffsmöglichkeiten vorgesehen beziehungsweise vorgenommen werden können.

Entsprechend einer weiteren exemplarischen Ausgestaltung weist das Verfahren ferner auf, dass die sichere Konfiguration der Kraftfahrzeugkomponente gesichert ist, gegen ein Manipulieren der sicheren Konfiguration.

Diese Ausgestaltung weist den Vorteil auf, dass eine besonders gegen Hacking geschützte Rückfalloption für eine Kraftfahrzeugfunktion vorgesehen werden kann.

Die Erfindung erlaubt es somit, einem anomalen Verhalten des Kraftfahrzeuges zu begegnen und Vorkehrungen vorzusehen und durchführen zu können, um ein solch anomales Verhalten auffangen zu können, damit das Kraftfahrzeug in einem solchen Fall einen weiterhin funktionssicheren Betrieb des Kraftfahrzeuges bereitstellen zu können. Somit wird es ermöglicht, spezifische auf das Fahrzeug, also inklusive der entsprechenden verbauten Teile, den Fahrer und die konkrete Fahrsituation zugeschnittene FunktionsParametrisierungen im Backend zu generieren und in das Fahrzeug zu laden, die ferner zusätzliches Wissen aus dem Backend berücksichtigen können.

Für die Funktionen sind Default-Parametrisierungen im Fahrzeug hinterlegt, die gegebenenfalls nur eine eingeschränkte Funktionalität ermöglicht. In einem extremen Fall kann dies bedeuten, dass eine Funktion deaktiviert ist, bis ein entsprechender Parameterdatensatz als Problemlösung verfügbar ist.

Und falls bei entsprechenden relevanten Fahrzeug-Eigenschaften ein kritisches Ereignis identifiziert ist, das als ein anomales Verhalten aufgefasst werden kann, suchen und bereitstellen eines entsprechendem Parameterdatensatzes, welcher beispielsweise entsprechende Funktionsparametrisierungen oder Funktionseinschränkungen beziehungsweise keine vollständige Funktionsaktivierungsfreigabe des entsprechenden Steuergerätes beziehungsweise der entsprechenden Funktion als Parameterinformation aufweisen kann.

Somit können Teilumfänge, also feingranular, von Funktionen beziehungsweise Steuergeräten über das Backend deaktiviert und/oder modifiziert werden, sobald diese Teilumfänge ein anomales Verhalten aufweisen.

Insbesondere können auftretende Fehler beziehungsweise Fehlfunktionen des Kraftfahrzeuges behoben werden.

In dem Fall eines Hackings des Kraftfahrzeuges kann besonders wirksam eingegriffen werden, um den Auswirkungen des Hackings als auch dem Hack selber wirkungsvoll entgegentreten zu können.

In Analogie zu einem differenzierten "Schottensystem" im Schiffsbau gegen Eintreten von Wasser, wird somit folgende Maßnahme im Automobil bezüglich einer dynamischen Abschottung von sensiblen Fahrzeugumfängen bei Auftreten von akuten Safety- und Security-relevanten Problemen vorgeschlagen.

Dies kann mittels einer Sicherheits-Steuerungseinheit im Fahrzeug erreicht werden, zur koordinierten Ausbildung von Sicherheitsmechanismen, falls im Backend oder im Fahrzeug durch Überwachungsalgorithmen ein Safety- oder Security-Problem erkannt wird.

Nachfolgen einige Beispiele solcher Sicherheitsmechanismen:
A) Anpassung Gateway-Tabelle - mittels Routing-Regeln von welchem auf welchen Bus beziehungsweise von welchem an welches Steuergerät - für bestimmte oder alle applikative Nachrichten, Signale und Diagnose-Nachrichten, beispielsweise Blockieren bestimmter Nachrichten-Typen oder Ids, Empfänger, Sender, Busse.
B) Änderung von Switch- und Router Konfigurationen, beispielsweise Ethernet / IP wie zum Beispiels nicht übersetzen bestimmter Nahrichten-Typen
C) Anpassung der maximal pro Zeiteinheit von einem Bus auf den anderen Bus oder von einem Steuergerät, auch SG genannt, auf ein anderes SG übersetzten Nachrichten, sogenannte Denail-of-Service Abwehr
D) Blockieren von Nachrichten bestimmter Absender oder Adressaten im Switch oder Gateway
E) Komplettes Deaktivieren bestimmter Steuergeräte und/oder Sensoren/Aktoren, mittels beispielsweise stromlos schalten, in den Bootloader versetzen, sämtliche ausgehenden Nachrichten blockieren, LIN-Bus deaktivieren, LIN-Sensoren/Aktoren Deaktivieren
F) Deaktivieren bestimmter Funktionen oder permanentes Degradieren
G) physikalisches Deaktivieren bestimmter Busanschlüsse

Die oben genannten Mechanismen können in zentralen oder dezentralen Gateways des Fahrzeugs umgesetzt werden.

Die oben genannten Mechanismen können auch einzeln beziehungsweise in vordefinierten Kombinationen abgesichert werden, bezüglich ihrer Wirksamkeit und gegebenenfalls zertifiziert sein bezüglich Safety/Security.

Ferner kann eine vordefinierte Ablage bestimmter Kombinationen im Fahrzeug vorgesehen werden.

Auch kann eine "Maximale-Sicherheits"-Konfiguration für die hier genannten Mechanismen im Kraftfahrzeug hinterlegt werden, wie beispielsweise eine Gateway-Tabelle, Bestromung und dergleichen, die zu einem maximal sicheren Fahrzeug führen und eine minimale Angriffsfläche / Restrisiko bieten. Ferner kann ein akutes Bilden von Quarantäne-Mechanismen für Teilsysteme wie beispielsweise Steuergeräte oder Busse erfolgen.

Das Auslösen solcher Konfigurationen kann durch die hier beispielhaft genannten Auslöse-Mechanismen erfolgen.

Die oben genannten Mechanismen können, falls aktiviert, optional dann nur in bestimmten Fahrzeug- oder Funktionszuständen wirksam sein, beispielsweise nur bei Fahrt, nicht aber im Stand; nur bei Internetzugriff, nicht aber bei offline-Betrieb des Fahrzeugs und dergleichen.

Das Auswählen der oben genannten Kombinationen von Mechanismen erfolgt dann nach bestimmten Fahrzeug- oder Funktionszuständen.

Die zuvor genannten Methoden können beispielsweise in einem zentralen Gateway zwischen zentralen Switches realisiert werden.

Die zuvor genannten Mechanismen beziehungsweise Methoden können durch einen Befehl ausgelöst werden oder auch durch Konfigurationsvorgabe aus dem Backend, im Fahrzeug oder vom Fahrzeugnutzer selbst, beispielsweise per Human-Machine-Interface, auch HMI genannt, oder USB-Stick. Eine HMI Eingabe könnte einen entsprechend langen und damit sicheren, vom Diensteprovider, wie beispielsweise dem Fahrzeughersteller, an den Kunden beispielsweise persönlich, per Brief, telefonisch oder auch per USB-Download mitgeteilten spezifischen "Geheim-Code" voraussetzen.

Die oben genannten Mechanismen können jedoch auch automatisch ausgelöst werden, wenn nicht innerhalb eines Zeitintervalls wiederkehrend ein Freischaltbefehl erfolgt, der das automatische Auslösen durch die Sicherheits-Steuerungseinheit verhindert. Der Freischaltbefehl kann dabei über Backend oder über Smartphone / USB Stick / Fahrzeugschlüssel des Kunden / QR-Code / Strichcode / Nummerneingabe / Mobilfunk / SMS erfolgen, falls eine Datenverbindung zum Backend nicht erfolgen kann.

Beispiel: Wenn das Überwachungssystem im Fahrzeug nicht jeweils innerhalb von 7 Tagen eine Nachricht aus dem Backend / Smartphone / USB-Stick / Datenspeicher auf dem Fahrzeugschlüssel / QR-Code / Strichcode - beispielsweise einlesbar über ein Smartphone mit Fahrzeuganbindung oder über Kameras des Fahrzeugs / Mobilfunk / SMS / Nummerneingabe erhält, dass das System bedenkenlos genutzt werden kann, erfolgt eine entsprechende Auslösung der oben genannten Mechanismen, um einen sicheren zustand einzunehmen. Das Backend kann dabei entsprechende Freischaltcodes generieren, gegebenenfalls fahrzeugspezifisch in Abhängigkeit der Ausstattung, HW-SW-Versionen, dem aktuellen Land, Kundenverhalten und dergleichen.

Ferner kann zusätzlich ein Mechanismus bereitgestellt werden, bei denen das Fahrzeug Fahrzeugdaten bereitstellt zur Ermittlung, ob das Fahrzeug von einem Security/Safety Thema betroffen ist und zur Ermittlung eines Freischaltkeys. Falls keine Online-verbindung herstellbar ist, kann dies auch über das Smartphone des Fahrzeugnutzers, einem USB Stick / Fahrzeugschlüssel des Fahrzeugnutzers / QR-Code / Strichcode / Anzeige eines Codes im Smartphone und/oder in der Head-Unit und dergleichen erfolgen. Dieser Code muss dann im Backend von einem fahrzeugexternen Computer aus eingegeben werden muss.

Die oben genannten Mechanismen können gegebenenfalls über eine 2-Faktor Authentifikation ausgelöst werden, beispielsweise kann ein Auslösen beziehungsweise deaktivieren der automatischen Auslösung nur erfolgen, falls über zwei unabhängige technische Wege die Auslösung beziehungsweise der Freischaltcode empfangen wurde.

Dabei kann ein Feedback an den Fahrzeugnutzer erfolgen, dass die Auslösung durchgeführt wurde. Auch kann eine Bestätigung durch den Fahrzeugnutzer erfolgen. Ferner kann auch eine Benachrichtigung erfolgen, dass eine automatische Auslösung bald vorgenommen wird, wenn der Freischaltcode nicht aktualisiert wird.

Zusätzliche kann eine Überprüfungseinheit im Fahrzeug vorgesehen werden, die unabhängig von der "Sicherheits-Steuerungseinheit" prüft, ob die Sicherheits-Konfiguration durch die Sicherheits-Steuerungseinheit erfolgreich war. Dies kann beispielsweise durch lauschen am Bus erfolgen, ob Funktion/Steuergeräte deaktiviert sind, einem Senden von Test-Nachrichten und dergleichen.

Die Überprüfungseinheit kann dabei besonders abgesichert/zertifiziert/geschützt umgesetzt sein.

Ferner kann eine Rückmeldung der Überprüfungseinheit an das Backend erfolgen, ob die Sicherheits-Konfiguration erfolgreich umgesetzt wurde.

Ferner kann eine gegenseitige Überprüfung der "Sicherheits-Steuerungseinheit" und der "Zusätzlichen Überprüfungseinheit" vorgenommen werden, beispielsweise mittels Alive, Verhaltensprüfung, Signatur/CRC/Fingerprint/Zertifikat. Dabei können Notfallmaßnahmen vorgesehen werden, falls die gegenseitige Überprüfung fehlschlägt, wie beispielsweise eine Benachrichtigung des Backendes, eine Deaktivierung oder Aktivierung von Sicherheitsmaßnahmen, wie beispielsweise vornehmen maximaler Sicherheits-Einstellungen.

Ferner kann eine zyklische Prüfung der Signaturen und Nachrichtenverhalten und Fehlermeldungen der Steuergeräte und Funktionen durch die Zusätzliche Überprüfungseinheit vorgenommen werden. Auch hier können Notfallmaßnahmen greifen, falls die Überprüfung fehlschlägt. Qualifizierte Schotten können dabei im Sinne einer Zertifizierung für Safety ISO26262 beziehungsweise Security vorgesehen werden.

Sowohl aus Sicht einzelner Funktionen, wie beispielsweise Remote Software-Update-Funktion des Fahrzeugs, HAF-Funktion, Fehlererkennung einer Funktion eines Steuergerätes, als auch durch die Sicherheits-Steuerungseinheit und der zusätzlichen Überprüfungseinheit, als auch von der Backend-Seite können Varianten zur Ausgestaltung und Aktivierung von Konfigurationen vorgesehen beziehungsweisebereitgestellt werden.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines vorgeschlagenen Verfahrens gemäß einer weiteren beispielhaften Ausgestaltung der Erfindung;
Fig. 4 eine schematische Darstellung eines vorgeschlagenen Verfahrens gemäß einer weiteren beispielhaften Ausgestaltung der Erfindung;
Fig. 5 eine schematische Darstellung eines vorgeschlagenen Verfahrens gemäß einer weiteren beispielhaften Ausgestaltung der Erfindung;
Fig. 6 eine schematische Darstellung eines vorgeschlagenen Verfahrens gemäß einer weiteren beispielhaften Ausgestaltung der Erfindung;
Fig. 7 eine schematische Darstellung eines vorgeschlagenen Verfahrens gemäß einer weiteren beispielhaften Ausgestaltung der Erfindung;
Fig. 8 eine schematische Darstellung eines vorgeschlagenen Verfahrens gemäß einer weiteren beispielhaften Ausgestaltung der Erfindung;
Fig. 9 eine schematische Darstellung einer vorgeschlagenen Vorrichtung gemäß einer weiteren beispielhaften Ausgestaltung der Erfindung; und
Fig. 10 eine schematische Darstellung eines vorgeschlagenen Kraftfahrzeuges gemäß einer weiteren beispielhaften Ausgestaltung der Erfindung.

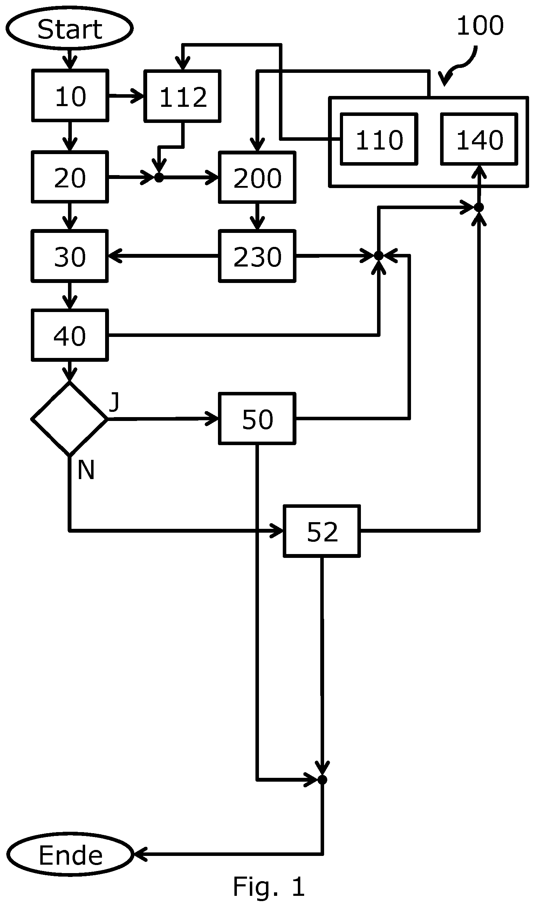

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Verfahren zur Überwachung und Modifikation von Kraftfahrzeugfunktionen in einem Kraftfahrzeug 100. Das Verfahren weist dabei auf: Ermitteln 10 eines anomalen Verhaltens 112 einer Funktion 110 des Kraftfahrzeuges 100. Übermitteln 20 des anomalen Verhaltens 112 der Funktion 110 des Kraftfahrzeuges 100 an ein Backend 200. Empfangen 30 einer Instruktion 230 von dem Backend 200, wobei die Instruktion 230 indikativ ist, für eine zu ergreifende akute Maßnahme in dem Kraftfahrzeug 100, um auf das anomale Verhalten 112 der Funktion 110 eine adäquate Reaktion auszuführen. Ermitteln 40 einer Kraftfahrzeugkomponente 140, welche ursächlich für das anomale Verhalten 112 der Funktion 110 des Kraftfahrzeuges 100 ist, basierend auf der empfangenen Instruktion 230. Überführen 50 der Kraftfahrzeugkomponente 140 in eine degradierte Konfiguration als adäquate Reaktion, wobei die degradierte Konfiguration einen eingeschränkteren Funktionsumfang aufweist, als in dessen bisheriger Konfiguration. Und falls das Überführen 50 der Kraftfahrzeugkomponente 140 in die degradierte Konfiguration nicht möglich ist, weist das Verfahren ferner ein Überführen 52 der Kraftfahrzeugkomponente 140 in eine sichere Konfiguration als adäquate Reaktion auf, wobei die sichere Konfiguration in der Kraftfahrzeugkomponente 140 vorgehalten ist.

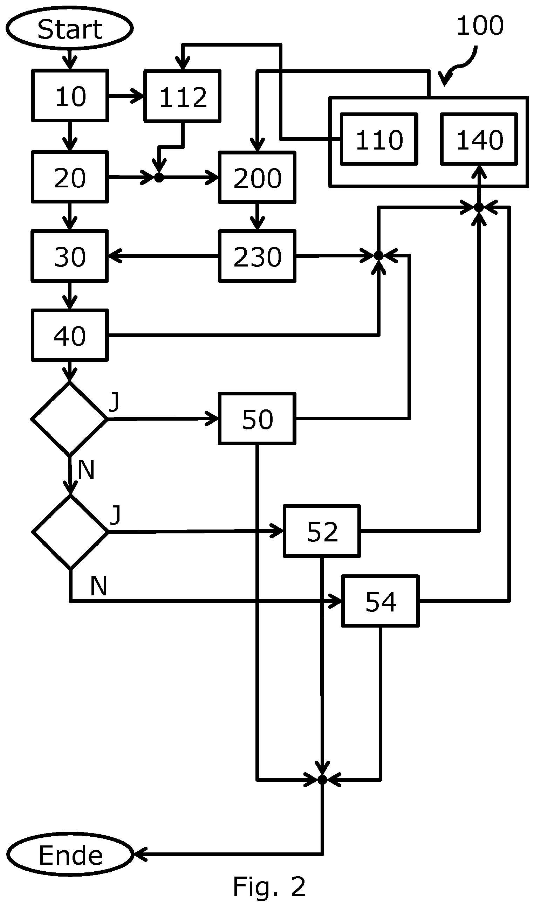

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung eines bezüglich der Fig. 1 weiterentwickelten Verfahrens. Das zuvor für Fig. 1 Gesagte, gilt daher auch für Fig. 2 fort.

Fig. 2 zeigt das Verfahren aus Fig. 1 bei dem ferner das Verfahren für den Fall, dass das Überführen 52 der Kraftfahrzeugkomponente 140 in die sichere Konfiguration nicht möglich ist, ein Abschalten 54 der Kraftfahrzeugkomponente 140 als adäquate Reaktion aufweist.

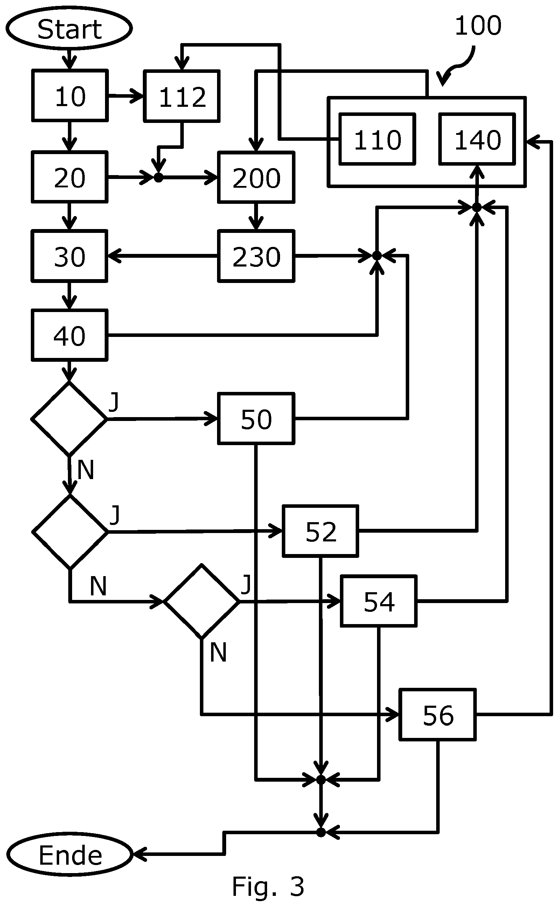

Fig. 3 zeigt eine schematische Darstellung eines vorgeschlagenen Verfahrens gemäß einer weiteren beispielhaften Ausgestaltung der Erfindung.

Dabei zeigt Fig. 3 eine schematische Darstellung eines bezüglich der Fig. 1 und Fig. 2 weiterentwickelten Verfahrens. Das zuvor für Fig. 1 und Fig. 2 Gesagte, gilt daher auch für Fig. 3 fort.

Fig. 3 zeigt das Verfahren aus Fig. 2 bei dem ferner das Verfahren für den Fall, dass das Abschalten 54 der Kraftfahrzeugkomponente 140 nicht erfolgreich ist, ein Überführen 56 des Kraftfahrzeuges 100 in einen sicheren Zustand als adäquate Reaktion aufweist, wobei der sichere Zustand einen sicheren Betrieb des Kraftfahrzeuges 100 bezüglich einer Safety- und/oder Security-Relevanz aufweist.

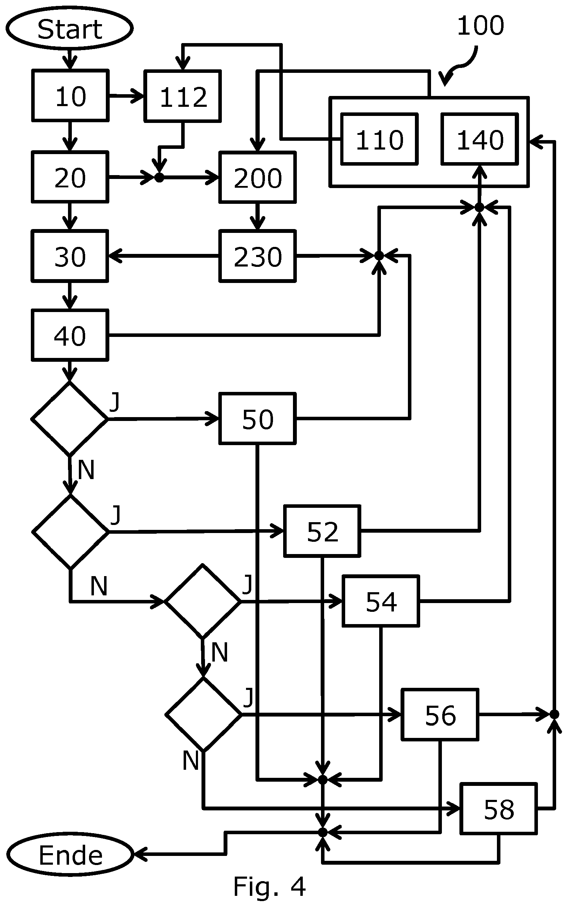

Fig. 4 zeigt eine schematische Darstellung eines vorgeschlagenen Verfahrens gemäß einer weiteren beispielhaften Ausgestaltung der Erfindung.

Dabei zeigt Fig. 4 eine schematische Darstellung eines bezüglich der Fig. 1 bis Fig. 3 weiterentwickelten Verfahrens. Das zuvor für Fig. 1 bis Fig. 3 Gesagte, gilt daher auch für Fig. 4 fort.

Fig. 4 zeigt das Verfahren aus Fig. 3 bei dem ferner das Verfahren für den Fall, dass das Überführen 56 des Kraftfahrzeuges 100 in den sicheren Zustand nicht möglich ist, ein Abschalten 58 eines Fahrbetriebes des Kraftfahrzeuges als adäquate Reaktion aufweist.

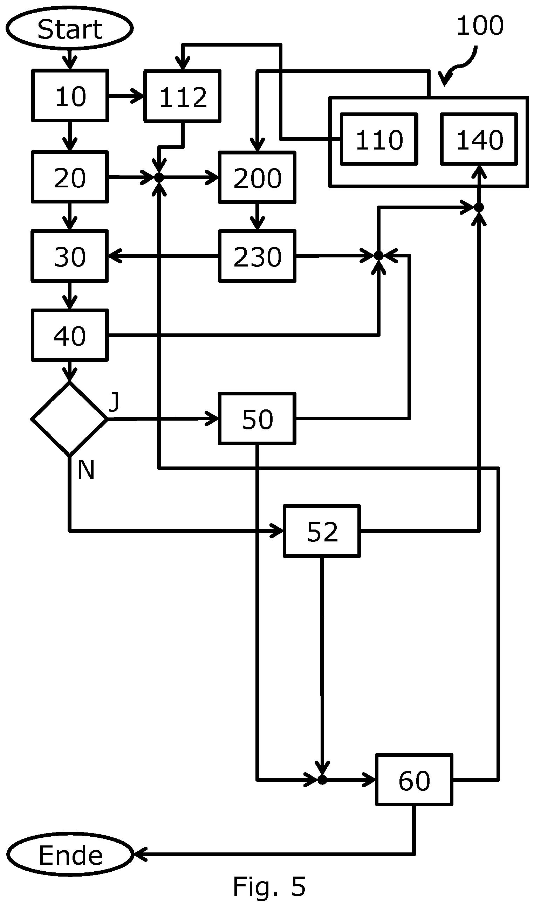

Fig. 5 zeigt eine schematische Darstellung eines vorgeschlagenen Verfahrens gemäß einer weiteren beispielhaften Ausgestaltung der Erfindung.

Dabei zeigt Fig. 5 eine schematische Darstellung eines bezüglich der Fig. 1 bis Fig. 4 weiterentwickelten Verfahrens. Das zuvor für Fig.1 bis Fig. 4 Gesagte, gilt daher auch für Fig. 5 fort.

Fig. 5 zeigt das Verfahren aus Fig. 4 bei dem ferner das Verfahren ein Übermitteln 60 der durchgeführten adäquaten Reaktion an das Backend 200 aufweist, als erfolgreich ergriffene akute Maßnahme in dem Kraftfahrzeug 100.

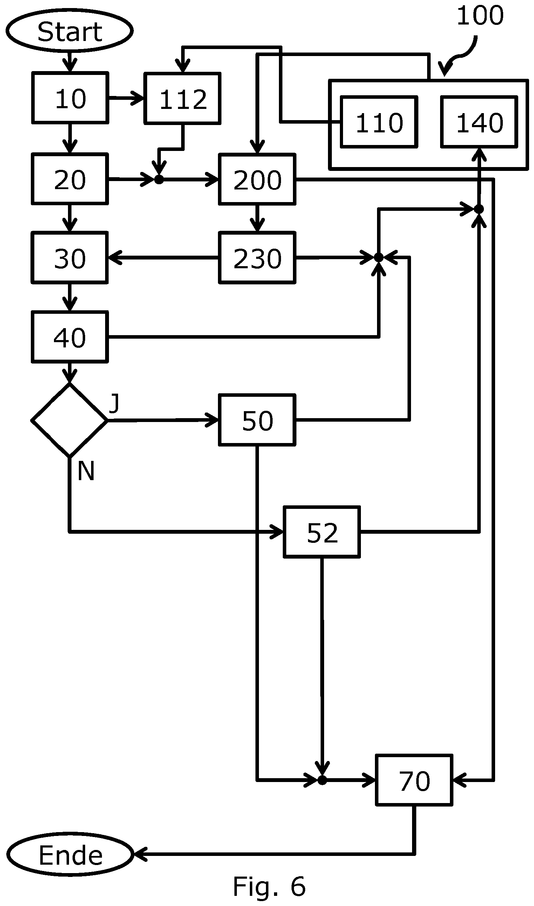

Fig. 6 zeigt eine schematische Darstellung eines vorgeschlagenen Verfahrens gemäß einer weiteren beispielhaften Ausgestaltung der Erfindung.

Dabei zeigt Fig. 6 eine schematische Darstellung eines bezüglich der Fig. 1 weiterentwickelten Verfahrens. Das zuvor für Fig. 1 Gesagte, gilt daher auch für Fig. 6 fort.

Fig. 6 zeigt das Verfahren aus Fig. 1 bei dem ferner das Verfahren ein Empfangen 70 eines Patches von dem Backend 200 aufweist, als eine Anomalie Korrektur Instruktion, die indikativ ist, für eine zu ergreifende persistente Maßnahme in dem Kraftfahrzeug 100, um das anomale Verhalten 112 der Funktion 110 künftig zu beseitigen und/oder zu unterbinden.

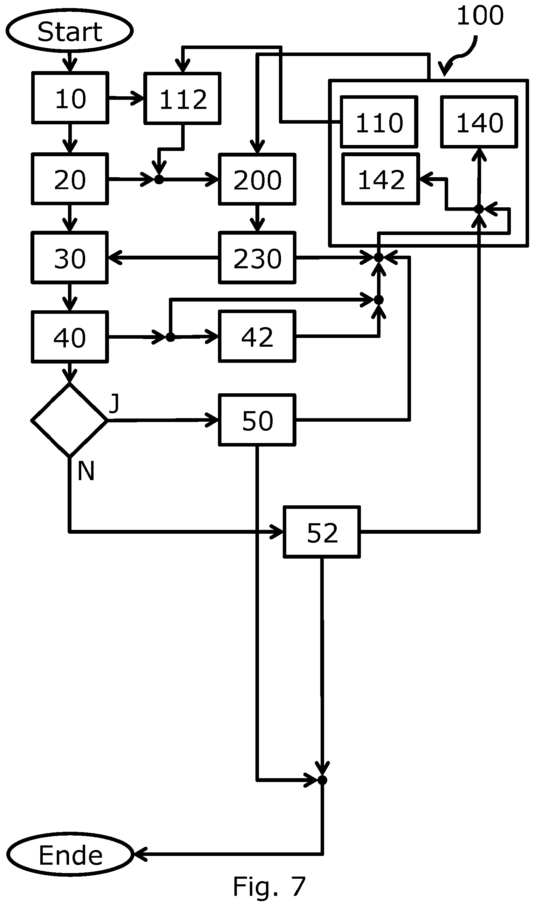

Fig. 7 zeigt eine schematische Darstellung eines vorgeschlagenen Verfahrens gemäß einer weiteren beispielhaften Ausgestaltung der Erfindung.

Dabei zeigt Fig. 7 eine schematische Darstellung eines bezüglich der Fig. 1 weiterentwickelten Verfahrens. Das zuvor für Fig. 1 Gesagte, gilt daher auch für Fig. 7 fort.

Fig. 7 zeigt das Verfahren aus Fig. 1 bei dem ferner das Verfahren aufweist: Ermitteln 42 einer weiteren Kraftfahrzeugkomponente 142, welche ebenfalls von dem anomalen Verhalten 112 der Funktion 110 des Kraftfahrzeuges 100 betroffen ist, vorzugsweise basierend auf der empfangenen Instruktion 230. Und entsprechendes Anwenden der weiteren Verfahrensschritte 50, 52, 54, 56, 58, 60, 70 zur Modifikation der Kraftfahrzeugkomponente 140 auf die weitere Kraftfahrzeugkomponente 142.

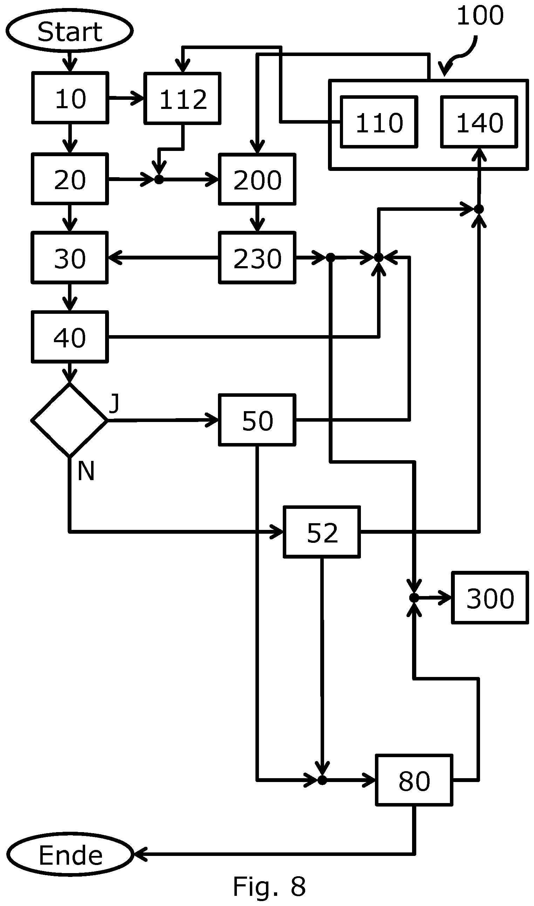

Fig. 8 zeigt eine schematische Darstellung eines vorgeschlagenen Verfahrens gemäß einer weiteren beispielhaften Ausgestaltung der Erfindung.

Dabei zeigt Fig. 8 eine schematische Darstellung eines bezüglich der Fig. 1 weiterentwickelten Verfahrens. Das zuvor für Fig. 1 Gesagte, gilt daher auch für Fig. 8 fort.

Fig. 8 zeigt das Verfahren aus Fig. 1 bei dem ferner das Verfahren ein Übermitteln 80 der durchgeführten adäquaten Reaktion an ein weiteres Kraftfahrzeug 300 aufweist, als Instruktion 230, für eine zu ergreifende aktuelle und/oder vorbeugende akute Maßnahme in dem weiteren Kraftfahrzeug 300.

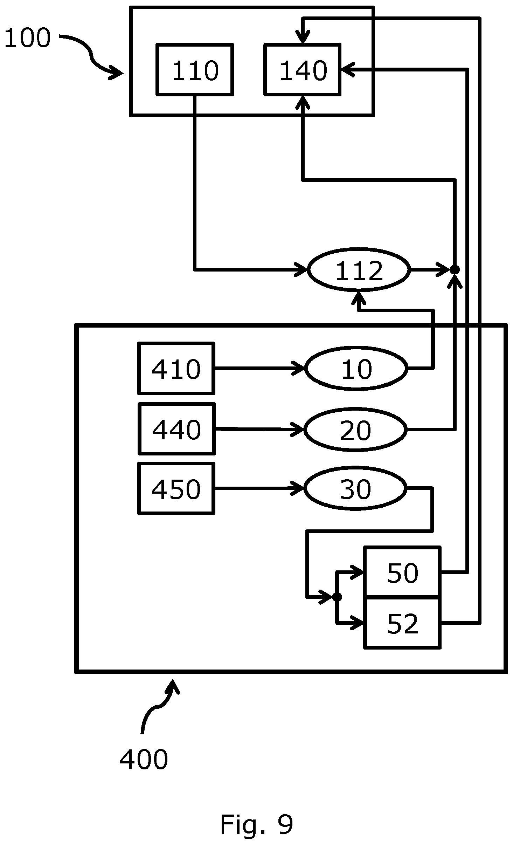

Fig. 9 zeigt eine schematische Darstellung einer vorgeschlagenen Vorrichtung gemäß einer weiteren beispielhaften Ausgestaltung der Erfindung.

Dabei zeigt Fig. 9 eine schematische Darstellung einer vorgeschlagenen Vorrichtung 400 zur Überwachung und Modifikation von Kraftfahrzeugfunktionen in einem Kraftfahrzeug 100. Die Vorrichtung 400 weist dabei auf: Eine Funktionsüberwachungsvorrichtung 410, zum Ermitteln 10 eines anomalen Verhaltens 112 einer Funktion 110 des Kraftfahrzeuges 100. Ein Ermittlungsmittel 440, zum Ermitteln 40 einer Kraftfahrzeugkomponente 140, welche ursächlich für das anomale Verhalten 112 der Funktion 110 des Kraftfahrzeuges 100 ist. Ein Modifizierungsmittel 450, zum Überführen 50, 52 der Kraftfahrzeugkomponente 140 in eine degradierte Konfiguration und/oder in eine sichere Konfiguration. Dabei weist die degradierte Konfiguration einen eingeschränkteren Funktionsumfang auf, als in dessen bisheriger Konfiguration. Die sichere Konfiguration ist in der Kraftfahrzeugkomponente 140 vorgehalten. Und dabei ist die sichere Konfiguration der Kraftfahrzeugkomponente 140 gesichert, gegen ein Manipulieren der sicheren Konfiguration. Und dabei ist die Vorrichtung 400 dazu eingerichtet, irgendein erfindungsgemäßes Verfahren auszuführen.

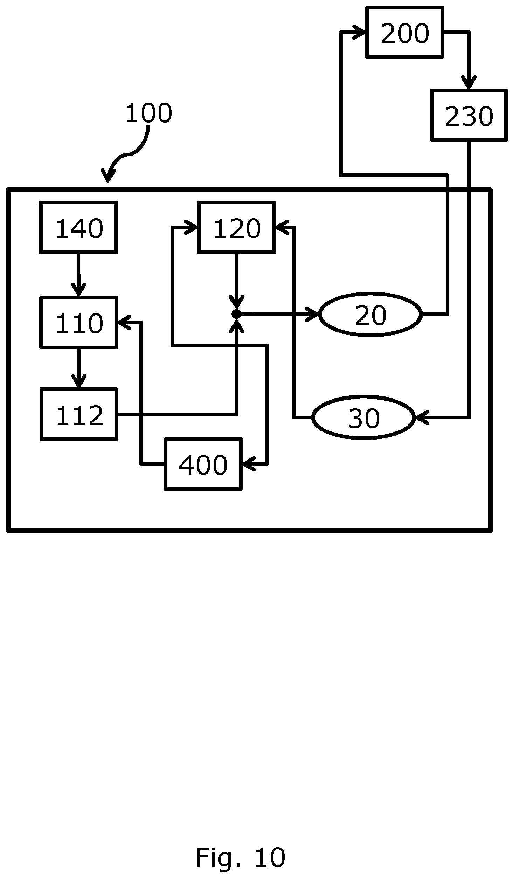

Fig. 10 zeigt eine schematische Darstellung eines vorgeschlagenen Kraftfahrzeuges gemäß einer beispielhaften Ausgestaltung der Erfindung.

Dabei zeigt Fig. 10 eine schematische Darstellung eines Kraftfahrzeuges 100 aufweisend: Mindestens eine Kraftfahrzeugkomponente 140, eine Mobilfunkkommunikationsvorrichtung 120, zum Übermitteln 20 eines anomalen Verhaltens 112 einer Funktion 110 des Kraftfahrzeuges 100 an ein Backend 200 und zum Empfangen 30 einer Instruktion 230 bezüglich des anomalen Verhaltens 112 der Funktion 110 und eine erfindungsgemäße Vorrichtung 400 zur Überwachung und Modifikation von Kraftfahrzeugfunktionen in dem Kraftfahrzeug 100. Und dabei weist die Kraftfahrzeugkomponente 140 eine sichere Konfiguration auf, die vorzugsweise gesichert ist, gegen ein Manipulieren der sicheren Konfiguration.

Dabei kommuniziert die erfindungsgemäße Vorrichtung 400 zur Überwachung und Modifikation von Kraftfahrzeugfunktionen mit der Mobilfunkkommunikationsvorrichtung 120, um die entsprechende Überwachung der Funktionen 110 im Kraftfahrzeug 100 und bei Bedarf entsprechende Modifikationen im Kraftfahrzeug 100 vornehmen zu können.

Die Erfindungsidee kann wie folgt zusammengefasst werden. Es werden ein Verfahren, eine diesbezügliche Vorrichtung und ein Kraftfahrzeug bereitgestellt, wodurch es möglich werden kann, dass für bestimmte Funktionen beziehungsweise Steuergeräte im Fahrzeug, die für diese Funktionen vorhandenen Parametersätze durch eine vom Fahrzeug beziehungsweise den zugehörigen Funktionen initiierte Abfrage an ein Backend beziehungsweise einen Server verändert werden können. Insbesondere kann dies auch temporär geschehen. Dies erfolgt dann, wenn ein anomales Verhalten einer Funktion des Kraftfahrzeuges festgestellt wird.

Im Fahrzeug werden die darin hinterlegten Parameter für Funktionen beziehungsweise Steuergeräte dabei sozusagen wie Default-Werte der Parametersätze für die entsprechenden Funktionen beziehungsweise Steuergeräte betrachtet. Diese Parametersätze können mit der vorgeschlagenen Erfindung im Bedarfsfall geändert werden, indem eine entsprechende Problemlösung aus einer Problemdatenbank angefordert beziehungsweise übermittelt wird, die eine entsprechende Parameterinformation als Workaround des entsprechenden Default-Parameterwertes des entsprechenden Parameters des entsprechenden Steuergerätes aufweist. Die Wirksamkeit des entsprechenden Parameters beziehungsweise Parametersatzes bezüglich der Problemlösung des kritischen Ereignisses, also des anomalen Verhaltens, kann dabei gegebenenfalls im Vorfeld abgesichert beziehungsweise zertifiziert sein.

Das heißt, Das Kraftfahrzeug beziehungsweise eine entsprechende Vorrichtung des Kraftfahrzeuges baut von sich aus eine Online-Verbindung zum Backend auf, holt sich aus dem Backend eine im Backend ermittelte/berechnete optimale Parametrisierung als Parameterinformation und überschreibt mit diesen optimalen Parameterwerten die Default-Werte. Das Überschreiben kann dabei insbesondere temporär erfolgen, so dass die Default-Werte nicht verloren gehen.

Den temporären Werten können dabei Kriterien als Rahmenbedingungen beigelegt werden, so dass bei Eintritt eines solchen Kriteriums die Funktion nicht mehr mit den temporären Werten aus dem Backend sondern erneut mit den Default-Werten parametrisiert wird.

Eine derart ausgelegte Funktion beziehungsweise ein derart ausgelegtes Steuergerät, wie beispielsweise die Fahrerassistenzfunktion "automatisches Fernlicht" würde also bei Auftreten eines anomalen Verhaltens eine entsprechende Meldung als Nachfrage im Backend auslösen und eine geeignete Parametrisierung für die entsprechende Funktion zurückgeben. Solch eine Parametrisierung im Beispiel des automatisierten Fernlichtes könnte dabei ein anomales Verhalten, bei dem beispielsweise eine "0" fehlerhaft in eine "1" umgewandelt wurde und dadurch gezielt entgegenkommende Fahrzeuge anleuchtet anstatt abzublenden, auffangen und korrigieren.

### Bezugszeichenliste

- 10: Ermitteln eines anomalen Verhaltens einer Funktion des Kraftfahrzeuges
- 20: Übermitteln des anomalen Verhaltens der Funktion des Kraftfahrzeuges an ein Backend
- 30: Empfangen einer Instruktion von dem Backend
- 40: Ermitteln einer Kraftfahrzeugkomponente
- 50: Überführen der Kraftfahrzeugkomponente in eine degradierte Konfiguration
- 52: Überführen der Kraftfahrzeugkomponente in eine sichere Konfiguration
- 54: Abschalten der Kraftfahrzeugkomponente
- 56: Überführen des Kraftfahrzeuges in einen sicheren Zustand
- 58: Abschalten eines Fahrbetriebes des Kraftfahrzeuges
- 60: Übermitteln der durchgeführten adäquaten Reaktion an das Backend
- 70: Empfangen eines Patches von dem Backend
- 80: Übermitteln der durchgeführten adäquaten Reaktion an ein weiteres Kraftfahrzeug
- 100: Kraftfahrzeug
- 110: Funktion des Kraftfahrzeuges
- 112: Anomales Verhalten der Funktion des Kraftfahrzeuges
- 120: Mobilfunkkommunikationsvorrichtung
- 140: Kraftfahrzeugkomponente
- 142: weitere Kraftfahrzeugkomponente
- 200: Backend
- 230: Instruktion
- 300: Weiteres Kraftfahrzeug
- 400: Vorrichtung
- 410: Funktionsüberwachungsvorrichtung
- 440: Ermittlungsmittel
- 450: Modifizierungsmittel

## Patentansprüche

1. Verfahren zur Überwachung und Modifikation von Kraftfahrzeugfunktionen in einem Kraftfahrzeug (100), das Verfahren aufweisend:
- Ermitteln (10) eines anomalen Verhaltens (112) einer Funktion (110) des Kraftfahrzeuges (100),
- Übermitteln (20) des anomalen Verhaltens (112) der Funktion (110) des Kraftfahrzeuges (100) an ein Backend (200),
- Empfangen (30) einer Instruktion (230) von dem Backend (200), wobei die Instruktion (230) indikativ ist, für eine zu ergreifende akute Maßnahme in dem Kraftfahrzeug (100), um auf das anomale Verhalten (112) der Funktion (110) eine adäquate Reaktion auszuführen,
- Ermitteln (40) einer Kraftfahrzeugkomponente (140), welche ursächlich für das anomale Verhalten (112) der Funktion (110) des Kraftfahrzeuges (100) ist, basierend auf der empfangenen Instruktion (230),
- Überführen (50) der Kraftfahrzeugkomponente (140) in eine degradierte Konfiguration als adäquate Reaktion, wobei die degradierte Konfiguration einen eingeschränkteren Funktionsumfang aufweist, als in dessen bisheriger Konfiguration, und
falls das Überführen (50) der Kraftfahrzeugkomponente (140) in die degradierte Konfiguration nicht möglich ist:
- Überführen (52) der Kraftfahrzeugkomponente (140) in eine sichere Konfiguration als adäquate Reaktion, wobei die sichere Konfiguration in der Kraftfahrzeugkomponente (140) vorgehalten ist.

2. Verfahren gemäß Anspruch 1, wobei das Verfahren ferner, für den Fall, dass das Überführen (52) der Kraftfahrzeugkomponente (140) in die sichere Konfiguration nicht möglich ist, aufweist:
- Abschalten (54) der Kraftfahrzeugkomponente (140) als adäquate Reaktion.

3. Verfahren gemäß Anspruch 2, wobei das Verfahren ferner, für den Fall, dass das Abschalten (54) der Kraftfahrzeugkomponente (140) nicht erfolgreich ist, aufweist:
- Überführen (56) des Kraftfahrzeuges (100) in einen sicheren Zustand als adäquate Reaktion, wobei der sichere Zustand einen sicheren Betrieb des Kraftfahrzeuges (100) bezüglich einer Safety- und/oder Security-Relevanz aufweist.

4. Verfahren gemäß Anspruch 3, wobei das Verfahren ferner, für den Fall, dass das Überführen (56) des Kraftfahrzeuges (100) in den sicheren Zustand nicht möglich ist, aufweist:
- Abschalten (58) eines Fahrbetriebes des Kraftfahrzeuges (100) als adäquate Reaktion.

5. Verfahren gemäß Anspruch 4, wobei
das Abschalten (58) des Fahrbetriebes des Kraftfahrzeuges (100), sicher bezüglich einer Safety-Relevanz des Kraftfahrzeuges (100) erfolgt.

6. Verfahren gemäß irgendeinem der vorhergehenden Ansprüche, das Verfahren ferner aufweisend:
- Übermitteln (60) der durchgeführten adäquaten Reaktion an das Backend (200), als erfolgreich ergriffene akute Maßnahme in dem Kraftfahrzeug (100) .

7. Verfahren gemäß irgendeinem der vorhergehenden Ansprüche, das Verfahren ferner aufweisend:
- Empfangen (70) eines Patches von dem Backend (200), als eine Anomalie-Korrektur-Instruktion, die indikativ ist, für eine zu ergreifende persistente Maßnahme in dem Kraftfahrzeug (100), um das anomale Verhalten (112) der Funktion (110) künftig zu beseitigen und/oder zu unterbinden.

8. Verfahren gemäß irgendeinem der vorhergehenden Ansprüche, das Verfahren ferner aufweisend:
- Ermitteln (42) einer weiteren Kraftfahrzeugkomponente (142), welche ebenfalls von dem anomalen Verhalten (112) der Funktion (110) des Kraftfahrzeuges (100) betroffen ist, vorzugsweise basierend auf der empfangenen Instruktion (230), und
- Entsprechendes Anwenden der weiteren Verfahrensschritte (50, 52, 54, 56, 58, 60, 70) zur Modifikation der Kraftfahrzeugkomponente (140) auf die weitere Kraftfahrzeugkomponente (142).

9. Verfahren gemäß irgendeinem der vorhergehenden Ansprüche, das Verfahren ferner aufweisend:
- Übermitteln (80) der durchgeführten adäquaten Reaktion an ein weiteres Kraftfahrzeug (300), als Instruktion (230), für eine zu ergreifende aktuelle und/oder vorbeugende akute Maßnahme in dem weiteren Kraftfahrzeug (300).

10. Verfahren gemäß Anspruch 9, wobei
das Übermitteln (80) der durchgeführten adäquaten Reaktion an das weitere Kraftfahrzeug (300) von dem Kraftfahrzeug (100) aus erfolgt.

11. Verfahren gemäß Anspruch 9 oder 10, wobei das Übermitteln (80) der durchgeführten adäquaten Reaktion an das weitere Kraftfahrzeug (300) von dem Backend (200) aus erfolgt.

12. Verfahren gemäß irgendeinem der vorhergehenden Ansprüche, wobei
das Ermitteln (10) des anomalen Verhaltens (112) der Funktion (110) des Kraftfahrzeuges (100) feststellbar ist von:
- dem Backend (200),
- einem Kraftfahrzeuginsassen, und/oder
- einer kraftfahrzeugeigenen Routine.

13. Verfahren gemäß irgendeinem der vorhergehenden Ansprüche, wobei
das Backend (200) eine zertifizierte kraftfahrzeugexterne Authorität aufweist.

14. Verfahren gemäß irgendeinem der vorhergehenden Ansprüche, wobei
die Instruktion (230) eine Weisung aufweist, unter welchen Kriterien die adäquate Reaktion wieder aufgehoben werden kann.

15. Verfahren gemäß irgendeinem der vorhergehenden Ansprüche, wobei
das anomale Verhalten (112) der Funktion (100) des Kraftfahrzeuges (100) indikativ ist, für ein Hacking des Kraftfahrzeuges (100) beziehungsweise der Kraftfahrzeugkomponente (140).

16. Verfahren gemäß irgendeinem der vorhergehenden Ansprüche, wobei
das anomale Verhalten (112) der Funktion (100) dazu geeignet ist, einen funktionssicheren Betrieb des Kraftfahrzeuges (100) zu gefährden.

17. Verfahren gemäß irgendeinem der vorhergehenden Ansprüche, wobei
die sichere Konfiguration der Kraftfahrzeugkomponente (140) gesichert ist, gegen ein Manipulieren der sicheren Konfiguration.

18. Vorrichtung (400) zur Überwachung und Modifikation von Kraftfahrzeugfunktionen in einem Kraftfahrzeug (100), die Vorrichtung (400) aufweisend:
- Eine Funktionsüberwachungsvorrichtung (410), zum Ermitteln (10) eines anomalen Verhaltens (112) einer Funktion (110) des Kraftfahrzeuges (100),
- Ein Ermittlungsmittel (440), zum Ermitteln (40) einer Kraftfahrzeugkomponente (140), welche ursächlich für das anomale Verhalten (112) der Funktion (110) des Kraftfahrzeuges (100) ist, und
- Ein Modifizierungsmittel (450), zum Überführen (50, 52) der Kraftfahrzeugkomponente (140) in eine:
- Degradierte Konfiguration, wobei die degradierte Konfiguration einen eingeschränkteren Funktionsumfang aufweist, als in dessen bisheriger Konfiguration, und/oder
- Sichere Konfiguration, wobei die sichere Konfiguration in der Kraftfahrzeugkomponente (140) vorgehalten ist, und wobei die sichere Konfiguration der Kraftfahrzeugkomponente (140) gesichert ist, gegen ein Manipulieren der sicheren Konfiguration, und wobei
die Vorrichtung (400) dazu eingerichtet ist, ein Verfahren gemäß irgendeinem der vorhergehenden Ansprüche auszuführen.

19. Kraftfahrzeug (100) aufweisend:
- Mindestens eine Kraftfahrzeugkomponente (140), wobei die Kraftfahrzeugkomponente (140) eine sichere Konfiguration aufweist, die vorzugsweise gesichert ist, gegen ein Manipulieren der sicheren Konfiguration,
- Eine Mobilfunkkommunikationsvorrichtung (120), zum Übermitteln (20) eines anomalen Verhaltens (112) einer Funktion (110) des Kraftfahrzeuges (100) an ein Backend (200) und zum Empfangen (30) einer Instruktion (230) bezüglich des anomalen Verhaltens (112) der Funktion (110), und
- Eine Vorrichtung (400) zur Überwachung und Modifikation von Kraftfahrzeugfunktionen in dem Kraftfahrzeug (100), gemäß Anspruch 18.

20. Ein Computerprogrammprodukt für eine Vorrichtung (400) gemäß Anspruch 18 und/oder für ein Kraftfahrzeug (100) gemäß Anspruch 19, wobei die Vorrichtung (400) gemäß Anspruch 18 nach einem Verfahren gemäß irgendeinem der vorhergehenden Ansprüche 1 bis 17 betreibbar ist.

21. Ein Datenträger, aufweisend ein Computerprogrammprodukt gemäß Anspruch 20.

## Claims

1. Method for monitoring and modifying motor vehicle functions in a motor vehicle (100), the method comprising:
- determining (10) an anomalous behavior (112) of a function (110) of the motor vehicle (100),
- communicating (20) the anomalous behavior (112) of the function (110) of the motor vehicle (100) to a backend (200),
- receiving (30) an instruction (230) from the backend (200), wherein the instruction (230) is indicative of an acute measure to be taken in the motor vehicle (100) in order to carry out an adequate reaction to the anomalous behavior (112) of the function (110),
- determining (40) a motor vehicle component (140) which is the cause of the anomalous behavior (112) of the function (110) of the motor vehicle (100), on the basis of the received instruction (230),
- converting (50) the motor vehicle component (140) into a degraded configuration as adequate reaction, wherein the degraded configuration has a more limited functional scope than in the previous configuration thereof, and if converting (50) the motor vehicle component (140) into the degraded configuration is not possible:
- converting (52) the motor vehicle component (140) into a safe configuration as adequate reaction, wherein the safe configuration is kept available in the motor vehicle component (140) .

2. Method according to Claim 1, wherein the method furthermore comprises, for the case where converting (52) the motor vehicle component (140) into the safe configuration is not possible:
- switching off (54) the motor vehicle component (140) as adequate reaction.

3. Method according to Claim 2, wherein the method furthermore comprises, for the case where switching off (54) the motor vehicle component (140) is not successful:
- converting (56) the motor vehicle (100) into a safe state as adequate reaction, wherein the safe state comprises safe operation of the motor vehicle (100) in respect of a safety and/or security relevance.

4. Method according to Claim 3, wherein the method furthermore comprises, for the case where converting (56) the motor vehicle (100) into the safe state is not possible:
- switching off (58) driving operation of the motor vehicle (100) as adequate reaction.

5. Method according to Claim 4, wherein
switching off (58) driving operation of the motor vehicle (100) is carried out safely in respect of a safety relevance of the motor vehicle (100).

6. Method according to any of the preceding claims, the method furthermore comprising:
- communicating (60) the adequate reaction carried out to the backend (200), as successfully taken acute measure in the motor vehicle (100).

7. Method according to any of the preceding claims, the method furthermore comprising:
- receiving (70) a patch from the backend (200), as an anomaly correction instruction which is indicative of a persistent measure to be taken in the motor vehicle (100) in order to eliminate and/or to prevent the anomalous behavior (112) of the function (110) in the future.

8. Method according to any of the preceding claims, the method furthermore comprising:
- determining (42) a further motor vehicle component (142) which is likewise affected by the anomalous behavior (112) of the function (110) of the motor vehicle (100), preferably on the basis of the received instruction (230), and
- correspondingly applying the further method steps (50, 52, 54, 56, 58, 60, 70) for modifying the motor vehicle component (140) to the further motor vehicle component (142).

9. Method according to any of the preceding claims, the method furthermore comprising:
- communicating (80) the adequate reaction carried out to a further motor vehicle (300), as instruction (230), for a current and/or preventive acute measure to be taken in the further motor vehicle (300) .

10. Method according to Claim 9, wherein communicating (80) the adequate reaction carried out to the further motor vehicle (300) is carried out from the motor vehicle (100).

11. Method according to Claim 9 or 10, wherein communicating (80) the adequate reaction carried out to the further motor vehicle (300) is carried out from the backend (200).

12. Method according to any of the preceding claims, wherein
determining (10) the anomalous behavior (112) of the function (110) of the motor vehicle (100) is ascertainable by:
- the backend (200),
- a motor vehicle occupant, and/or
- a motor vehicle-specific routine.

13. Method according to any of the preceding claims, wherein
the backend (200) comprises a certified motor vehicle-external authority.

14. Method according to any of the preceding claims, wherein
the instruction (230) comprises an indication of the criteria under which the adequate reaction can be canceled again.

15. Method according to any of the preceding claims, wherein
the anomalous behavior (112) of the function (100) of the motor vehicle (100) is indicative of hacking of the motor vehicle (100) or of the motor vehicle component (140).

16. Method according to any of the preceding claims, wherein
the anomalous behavior (112) of the function (100) is suitable for jeopardizing functionally safe operation of the motor vehicle (100).

17. Method according to any of the preceding claims, wherein
the safe configuration of the motor vehicle component (140) is safeguarded against manipulation of the safe configuration.

18. Device (400) for monitoring and modifying motor vehicle functions in a motor vehicle (100), the device (400) comprising:
- a function monitoring device (410), for determining (10) an anomalous behavior (112) of a function (110) of the motor vehicle (100),
- a determining means (440), for determining (40) a motor vehicle component (140) which is the cause of the anomalous behavior (112) of the function (110) of the motor vehicle (100), and
- a modifying means (450), for converting (50, 52) the motor vehicle component (140) into a:
- degraded configuration, wherein the degraded configuration has a more limited functional scope than in the previous configuration thereof, and/or
- safe configuration, wherein the safe configuration is kept available in the motor vehicle component (140), and wherein the safe configuration of the motor vehicle component (140) is safeguarded against manipulation of the safe configuration, and wherein
the device (400) is configured to carry out a method according to any of the preceding claims.

19. Motor vehicle (100) comprising:
- at least one motor vehicle component (140), wherein the motor vehicle component (140) has a safe configuration, which is preferably safeguarded against manipulation of the safe configuration,
- a mobile radio communication device (120), for communicating (20) an anomalous behavior (112) of a function (110) of the motor vehicle (100) to a backend (200) and for receiving (30) an instruction (230) in respect of the anomalous behavior (112) of the function (110), and
- a device (400) for monitoring and modifying motor vehicle functions in the motor vehicle (100), according to Claim 18.

20. A computer program product for a device (400) according to Claim 18 and/or for a motor vehicle (100) according to Claim 19, wherein the device (400) according to Claim 18 is operable according to a method according to any of the preceding Claims 1 to 17.

21. A data carrier, comprising a computer program product according to Claim 20.

## Revendications

1. Procédé de surveillance et de modification de fonctions de véhicule automobile dans un véhicule automobile (100), le procédé comprenant :
- la détermination (10) d'un comportement anormal (112) d'une fonction (110) du véhicule automobile (100),
- la communication (20) du comportement anormal (112) de la fonction (110) du véhicule automobile (100) à un serveur principal (200),
- la réception (30) d'une instruction (230) du serveur principal (200), l'instruction (230) étant indicative d'une mesure urgente à prendre dans le véhicule automobile (100) afin d'appliquer une réaction adéquate au comportement anormal (112) de la fonction (110),
- la détermination (40) d'un composant de véhicule automobile (140) qui est causal du comportement anormal (112) de la fonction (110) du véhicule automobile (100), en se basant sur l'instruction (230) reçue,
- le transfert (50) du composant de véhicule automobile (140) dans une configuration dégradée en tant que réaction adéquate, la configuration dégradée présentant une étendue fonctionnelle plus limitée que dans la configuration actuelle, et
dans le cas où le transfert (50) du composant de véhicule automobile (140) dans la configuration dégradée n'est pas possible :
- le transfert (52) du composant de véhicule automobile (140) dans une configuration sécurisée en tant que réaction adéquate, la configuration sécurisée étant réservée dans le composant de véhicule automobile (140).

2. Procédé selon la revendication 1, le procédé comprenant en outre, dans le cas où le transfert (52) du composant de véhicule automobile (140) dans la configuration sécurisée n'est pas possible :
- la mise à l'arrêt (54) du composant de véhicule automobile (140) en tant que réaction adéquate.

3. Procédé selon la revendication 2, le procédé comprenant en outre, dans le cas où la mise hors circuit (54) du composant de véhicule automobile (140) n'a pas réussi :
- le transfert (50) du véhicule automobile (100) dans un état sécurisé en tant que réaction adéquate, l'état sécurisé présentant un fonctionnement sécurisé du véhicule automobile (100) pour ce qui concerne une pertinence à la sûreté et/ou la sécurité.

4. Procédé selon la revendication 3, le procédé comprenant en outre, dans le cas où le transfert (56) du véhicule automobile (100) dans l'état sécurisé n'est pas possible :
- la mise à l'arrêt (58) d'un régime de déplacement du véhicule automobile (100) en tant que réaction adéquate.

5. Procédé selon la revendication 4, la mise à l'arrêt (58) du régime de déplacement du véhicule automobile (100) s'effectuant de manière sécurisée pour ce qui concerne une pertinence à la sûreté du véhicule automobile (100).

6. Procédé selon l'une quelconque des revendications précédentes, le procédé comprenant en outre :
- la communication (60) au serveur principal (200) de la réaction adéquate appliquée en tant que mesure urgente prise avec succès dans le véhicule automobile (100).

7. Procédé selon l'une quelconque des revendications précédentes, le procédé comprenant en outre :
- la réception (70) d'un correctif de la part du serveur principal (200), sous la forme d'une instruction de correction d'anomalie qui est indicative d'une mesure persistante à prendre dans le véhicule automobile (100) en vue d'éliminer et/ou d'inhiber dans l'avenir le comportement anormal (112) de la fonction (110).

8. Procédé selon l'une quelconque des revendications précédentes, le procédé comprenant en outre :
- la détermination (42) d'un composant de véhicule automobile supplémentaire (142), lequel est également concerné par le comportement anormal (112) de la fonction (110) du véhicule automobile (100), de préférence en se basant sur l'instruction (230) reçue, et
- l'utilisation en conséquence des étapes de procédé supplémentaires (50, 52, 54, 56, 58, 60, 70) pour la modification du composant de véhicule automobile (140) en le composant de véhicule automobile supplémentaire (142) .

9. Procédé selon l'une quelconque des revendications précédentes, le procédé comprenant en outre :
- la communication (80) de la réaction adéquate appliquée à un véhicule automobile supplémentaire (300) sous la forme d'une instruction (230) pour une mesure urgente actuelle et/ou préventive à prendre dans le véhicule automobile supplémentaire (300).

10. Procédé selon la revendication 9, la communication (80) de la réaction adéquate appliquée au véhicule automobile supplémentaire (300) s'effectuant à partir du véhicule automobile (100).

11. Procédé selon la revendication 9 ou 10, la communication (80) de la réaction adéquate appliquée au véhicule automobile supplémentaire (300) s'effectuant à partir du serveur principal (200).

12. Procédé selon l'une quelconque des revendications précédentes, selon lequel
la détermination (10) du comportement anormal (112) de la fonction (110) du véhicule automobile (100) pouvant être constatée par :
- le serveur principal (200),
- un occupant du véhicule automobile, et/ou
- une routine propre au véhicule automobile.

13. Procédé selon l'une quelconque des revendications précédentes, selon lequel
le serveur principal (200) possède une autorité externe au véhicule automobile certifiée.

14. Procédé selon l'une quelconque des revendications précédentes, selon lequel
l'instruction (230) présentant une directive concernant les critères sous lesquels la réaction adéquate peut de nouveau être annulée.

15. Procédé selon l'une quelconque des revendications précédentes, selon lequel
le comportement anormal (112) de la fonction (110) du véhicule automobile (100) étant indicatif d'un piratage du véhicule automobile (100) ou du composant de véhicule automobile (140).

16. Procédé selon l'une quelconque des revendications précédentes, selon lequel
le comportement anormal (112) de la fonction (110) étant apte à menacer un fonctionnement fonctionnellement sécurisé du véhicule automobile (100).

17. Procédé selon l'une quelconque des revendications précédentes, selon lequel
la configuration sécurisée du composant de véhicule automobile (140) étant protégée contre une manipulation de la configuration sécurisée.

18. Dispositif (400) de surveillance et de modification de fonctions de véhicule automobile dans un véhicule automobile (100), le dispositif (400) comprenant :
- un dispositif de surveillance de fonction (410) destiné à déterminer (10) un comportement anormal (112) d'une fonction (110) du véhicule automobile (100),
- un moyen de détermination (440) destiné à déterminer (40) un composant de véhicule automobile (140) qui est causal du comportement anormal (112) de la fonction (110) du véhicule automobile (100), et
- un moyen de modification (450) destiné à transférer (50, 52) le composant de véhicule automobile (140) dans une :
- configuration dégradée, la configuration dégradée présentant une étendue fonctionnelle plus limitée que dans la configuration actuelle, et/ou
- configuration sécurisée, la configuration sécurisée étant réservée dans le composant de véhicule automobile (140) et la configuration sécurisée du composant de véhicule automobile (140) étant protégée contre une manipulation de la configuration sécurisée, et
le dispositif (400) étant conçu pour mettre en œuvre un procédé selon l'une quelconque des revendications précédentes.

19. Véhicule automobile (100), comprenant :
- au moins un composant de véhicule automobile (140), le composant de véhicule automobile (140) possédant une configuration sécurisée qui est de préférence protégée contre une manipulation de la configuration sécurisée,
- un dispositif de radiocommunication mobile (120), destiné à communiquer (20) un comportement anormal (112) d'une fonction (110) du véhicule automobile (100) à un serveur principal (200) et à recevoir (30) une instruction (230) concernant le comportement anormal (112) de la fonction (110), et
- un dispositif (400) de surveillance et de modification de fonctions de véhicule automobile dans le véhicule automobile (100), selon la revendication 18.

20. Produit de programme informatique pour un dispositif (400) selon la revendication 18 et/ou pour un véhicule automobile (100) selon la revendication 19, le dispositif (400) selon la revendication 18 pouvant fonctionner conformément à un procédé selon l'une quelconque des revendications 1 à 17.

21. Support de données, comprenant un produit de programme informatique selon la revendication 20.
